# EUROPEAN PATENT SPECIFICATION

(11) **EP 4 191 543 B1**
(45) Date of publication and mention of the grant of the patent: **30.10.2024**
(21) Application number: 22150477.2
(22) Date of filing: 06.01.2022
(51) Int. Cl.: G06V 10/00

(54) **IMAGE PROCESSING SYSTEM**
BILDVERARBEITUNGSSYSTEM
SYSTÈME DE TRAITEMENT DES IMAGES

(30) Priority: 01.12.2021 US 202117540011
(43) Date of publication of application: 07.06.2023
(73) Proprietor: FotoNation Limited, H91V0TX Galway (IE)
(72) Inventor: BIGIOI, Petronel, Galway, H91V0TX (IE); TOCA, Cosmin, 061344 Bucharest (RO); BALABAN, Ana, 061344 Bucharest (RO)
(74) Representative: Murgitroyd & Company

(56) References cited:
- EP-A2- 1 542 154
- WO-A1-2017/034683
- US-A1- 2019 130 188
- US-A1- 2021 117 658

## Description

### Field

The present invention relates to an image processing system, in particular an image processing system for an image acquisition device such as a security camera or a doorbell camera.

### Background

The utility of security cameras or doorbell cameras for monitoring an environment is well appreciated.

One particular application for such cameras allows users to monitor for deliveries at a home or premises, especially, when an occupier is not present to accept the delivery, for example, of a package.

Security cameras or doorbells can typically monitor for an event caused by movement or the presence of a person or a face within the field of view of the camera. Once such an event is detected, one or more authorized users can be notified on their connected device, such as a computer or smartphone, allowing the user(s) to view the camera feed remotely or to view a clip provided from the camera in response to the event or indeed to interact with a person through the security camera or doorbell.

While such cameras can generate an alert in response to an event, they cannot determine if, for example, a package has been dropped off or taken away. As such, the user must typically view the feed or review the video clip from the camera in response to an alert to determine the significance of the event.

Omar Elharrouss, Noor Almaadeed, Somaya Al-Maadeed, "A review of video surveillance systems", Journal of Visual Communication and Image Representation, Volume 77, May 2021, 103116 discusses automated surveillance systems which can analyze an observed scenario using motion detection, crowd behavior, individual behavior, interaction between individuals, crowds and their surrounding environment.

These automatic systems can accomplish a multitude of tasks which include, detection, interpretation, understanding, recording and creating alarms based on the analysis.

However, prior approaches which rely on explicitly detecting an object with a view to interpreting activity within an environment tend to be computationally expensive. On the other hand, approaches which rely on trackers tend to be less computationally expensive, but are prone to errors when objects intersect each other in the field of view of the camera. Also, if there are a number objects in an environment, the tracker needs to run multiple times for each image frame.

US 2019/0130188 discloses a system for classifying objects in one or more video frames. A plurality of object trackers for a current video frame are obtained. A plurality of classification requests are also obtained. The classification requests are associated with a subset of object trackers from the plurality of object trackers, and are generated based on one or more characteristics associated with the subset of object trackers. Based on the obtained plurality of classification requests, an object tracker is selected from the subset of object trackers for object classification. For example, the object tracker is selected from the subset of object trackers based on priorities assigned to the subset of object trackers. The object classification is then performed for the selected at least one object tracker.

EP 1 542 154 discloses an object detection apparatus in which regions of a test image from an ordered series of images are compared with data indicative of the presence of an object. The apparatus comprises a change detector operable to detect regions of the test image which are substantially unchanged with respect to a previous image in the series; and an object detector operable not to perform object detection on regions of the test image identified by the change detector as being substantially unchanged.

There remains a need for an image processing system which can be readily configured to interpret the meaning of activity within the field of view of the camera.

### Summary

According to the present invention, there is provided an image processing system according to claim 1.

In embodiments of the present invention, an activity detector classifies successive image frames acquired from an image acquisition device to determine if activity is occurring within a field of view of the image acquisition device or not. Regression, where a state detector determines the state of the environment, is then only required to be performed once activity has ceased.

In embodiments, the activity detector runs continuously on image frames successively acquired from an image acquisition device, while the state detector is triggered to run intermittently.

This allows an environment to be monitored with lower computational cost than in the prior art.

The state detector can employ two input frames to determine the state of the environment in front of the camera, i.e., one before activity occurs and the other after activity ends.

As activity detection is performed independently of state detection, updating the detector performing one function does not need to affect the other.

Embodiments of the present invention may employ small neural networks which can be executed relatively infrequently.

Embodiments can detect any moving object and provide an exact location of objects within an environment, while ignoring background movement.

Embodiments can allow objects detected within the field of view of the camera to be automatically classified according to their appearance. The classifier can be tuned to identify a large and easily extensible number of known objects - independently of the activity detector and state detector.

In some cases, the system can identify the delivery company that brought an object, for example, Amazon, UPS, DHL.

### Brief Description of the Drawing

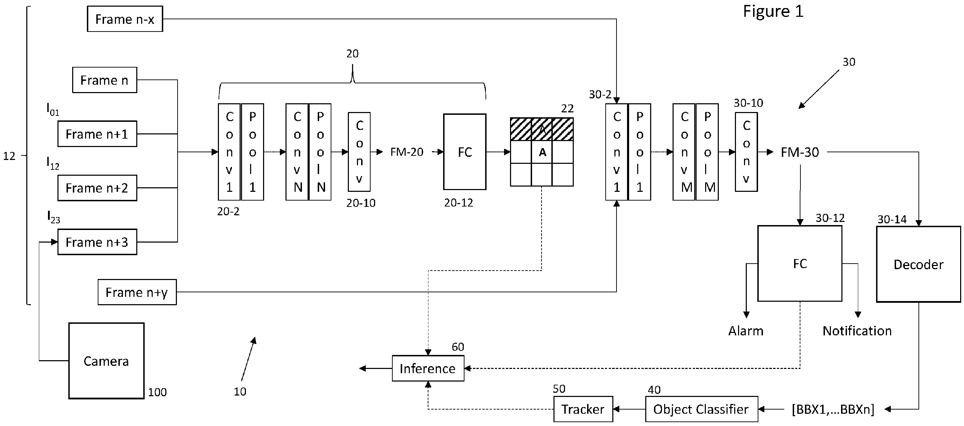

An embodiment of the invention will now be described, by way of example, with reference to the accompanying drawing, Figure 1, which illustrates schematically an image processing system according to an embodiment of the invention.

### Description of the Embodiment

Referring now to Figure 1, there is shown an image processing system 10 according to an embodiment of the invention.

The system receives a sequence of images 12 from an image acquisition device 100. The system can form an integral part of the image acquisition device and in such a case would receive image information either directly from an image processing pipeline or from memory across a system bus. On the other hand, the system 10 could be remote from the image acquisition device 100 and so would receive image information across a network connection - either wired, wireless or a combination of both - in an otherwise conventional fashion. The image acquisition device 100 can comprise any of a color camera, hyperspectral camera or a monochrome camera. The camera can be sensitive to visible light and/or infra-red light. In some cases, the camera can comprise a conventional frame based camera, whereas in other implementations, the camera can comprise an event camera with event information being accumulated and provided in frames, as disclosed in WO2022/053192 (PCT/EP2021/066440) (Ref: FN-668-PCT).

The system 10 comprises 2 main components, an activity detector 20 and a state detector 30. The activity detector 20 determines the presence of any moving entity within the field of view of the camera, typically in response to a change in the position of an object relative to its contextual surroundings.

Any movement detected in the area of interest within the field of view of the camera by the activity detector 20 triggers the verification of the presence of the previously detected objects or the appearance of newly detected objects by the state detector 30.

In the embodiment, similar to the techniques disclosed in European Application EP3905116 corresponding to US Patent Application No. 63/017,165 filed 29 April 2020 and entitled "Image Processing System" (Ref: FN-661-US), the activity detector 20 receives a set of image frames, in this case 4: n,n+1,n+2,n+3 from the sequence 12. The frames are combined in a first convolutional layer 20-2 and then fed through a series of pooling and convolutional layers forming an encoder to a final convolutional layer 20-10 which produces an intermediate feature map, FM-20, typically of substantially lower resolution than the input image frames.

As in EP3905116, the results of previous computations performed during analysis of a previous set of frames can be stored for used in analyzing a subsequent set of frames. Again, the temporal spacing I₀₁, I₁₂, I₂₃ between the frames 12 which are fed to the activity detector 20 can be varied so that the detector 20 can respond to both faster and slower moving objects appearing within the field of view of the camera. In particular, varying the interval I₂₃ between the currently acquired image and the immediately previous image of the set allows the initial convolution of frames n, n+1 and n+2 to be stored and saved for use with a number of subsequent frames. Objects detected when I₂₃ is largest can be labelled as fast moving, whereas objects detected when I₂₃ is smallest can be labelled slow moving and this information can be used later when making inferences about activity in the environment of the camera 100.

The encoder 20-2...20-10 may typically comprise 5 convolutional layers. Typically, 3x3 convolution kernels can be employed, but it will be appreciated that larger kernels or kernels layers with varying stride can also be employed. Pooling may comprise MaxPooling or other pooling layers and clearly the encoder may include varying numbers of layers and other functionality such as activation function layers.

As shown in Figure 1, the feature map, FM-20, is then provided to a classifier 20-12 comprising a sequence of fully connected (FC) layers, the last of which comprises a plurality of nodes, each signaling whether or not movement is occurring within a respective cell of a grid 22 corresponding to the field of view of the camera 100.

In other embodiments, such as in EP3905116, an instance of a movement classifier network could be applied to each cell of the feature map FM-20 produced by the encoder 20-2..20-10 to determine if movement is occurring within that cell.

In other embodiments, rather than fully connected layers 20-12, the activity detector 20 could include a decoder providing a map of areas potentially including activity.

In any case, a user when configuring the system may interactively choose portions of the field of view of the image acquisition device 100 which are to be monitored, e.g. those which correspond to their private property, and those which are not to be monitored e.g. public property or trees which tend to move in the wind.

As such, movement in cells which are not to be monitored can be ignored, or a movement classifier need not be applied to cells which correspond to portions of the field of view of the image acquisition device which are not to be monitored.

So, in the example of Figure 1, the field of view of the camera is divided into a 3x3 grid of cells. A user has designated activity in the top row of cells to be ignored. In the case of the frames n...n+3, activity (A) is detected in two cells, one of which is designated to be monitored and so the state detector 30 is triggered.

In the embodiment, activity is binary - it is either occurring within a cell of the grid 22 or not. In variations of the embodiment, more complicated activity classification can be performed. For example, the classifier layers can indicate a type of activity, for example, whether a moving person or a moving face has been detected, along with a score for that activity.

As shown in Figure 1, in response to analyzing the given set of frames, an instance of the activity detector 20 signals that there is activity within a cell of interest. The last image frame n-x acquired by the camera 100 before this sequence can be regarded as indicating the state of the environment of the camera prior to activity being detected. This frame can be chosen as a frame immediately before the frames 12 or a given number x of frames before the frames 12. Activity may continue to be detected by the detector for a number of sets of frames - but for the purposes of illustration, only 1 such detection frame n+3 is illustrated in Figure 1.

In any case, the system is configured to continually update a temporary store with image data for a last acquired image frame n-x where no activity was detected by the detector 20, so that this can be used subsequently by the state detector 30 as described below.

At some stage after detecting activity, activity will cease and an instance of the activity detector 20 will indicate that there is no longer activity in any of the cells of interest in the field of view of the camera.

At this stage, the last acquired frame, which at that stage will be frame n+y can now be regarded as indicating the state of the environment of the camera prior after activity has ceased.

Each of the image frames n-x and n+y are now fed to an instance of the state detector 30.

Similar to the activity detector 20, each instance of the state detector 30 combines the two image frames n-x and n+y in a convolutional layer 30-2 before again feeding the output through a series of pooling and convolutional layers, as well as any other required layers, forming an encoder to a final convolutional layer 30-10 which produces an intermediate feature map, FM-30.

A final set of fully connected classification layers 30-12 of the state detector 30 can produce a variety of outputs based on the feature map FM-30.

In a simple example, the addition of an(other) object within the field of view of the camera from before activity to after activity can be used to signal a (positive) notification of delivery. On the other hand, the removal of an object from within the field of view of the camera from before activity to after activity can be used to signal an alarm.

In other implementations, in addition or as an alternative to fully connected layers 30-12, the feature map FM-30 produced by the state detector encoder layers 30-2 to 30-10 can be provided to a decoder 30-14, again comprising a number of convolutional and unpooling layers, and whose output can comprise an output map in the form of a grid, where each grid point encodes a bounding box located there (width & height of the bounding box, x,y offset related to the grid point) along with an indication of whether the bounding box contains an object of interest, for example, as disclosed at https://www.jeremyjordan.me/obiect-detection-one-stage/.

The map can then be analysed to provide a set of bounding box coordinates {BBX1...BBXn] to an object classifier 40.

Any region from the last acquired image frame n+y, when compared with frame n-x, corresponding to a newly detected bounding box with a confidence level above a given threshold can be analysed by the object classifier 40 with a view to determining the type of object detected, for example, a parcel.

This allows the system to determine not alone, when an object has been placed, but also the exact location of the object. This information can in turn be provided to a tracker 50 which can track changes in the location of an object, whether classified or not, over time.

Information produced by the state detector classifier 30-12, as well as the decoder 30-14, classifier 40, tracker 50 and the original activity detection can be employed by an inference engine 60 to generate more meaningful messages for a user.

So for example, if the system identifies a newly detected object as a bouquet of flowers, without previously detecting a person moving in front of the camera, it can infer the flowers were thrown in front of the camera location. Alternatively, if a parcel has been identified, a person is subsequently detected and the parcel is then no longer in view of the camera, the system can infer that a person picked up a parcel from in front of the camera location.

## Claims

1. An image processing system comprising a processor configured to receive a sequence of images frames (12) from an image acquisition device (100), the system being configured to:
analyze a currently acquired image (n+3) frame and at least one previously acquired image frame (n...n+2) to determine if activity is occurring in an environment within a field of view of the image acquisition device, activity comprising any movement detected in an area of interest within the field of view of the image acquisition device (100);
responsive to analyzing a subsequent image frame (n+y) acquired after said currently acquired image frame and at least one image frame acquired before said subsequent image frame and determining that no activity is occurring in said environment, retrieve an image frame (n-x) acquired before said currently acquired image frame (n...n+3) which has been analyzed and where it has been determined that no activity is occurring in said environment;
analyze (30-12) only said subsequent image frame and said retrieved image frame to identify a state of one or more objects within the field of view of the image acquisition device, whereby the state indicates the presence of one or more previously detected objects or the appearance of one or more newly detected objects; and
responsive to a change in state of said one or more objects, notify a user accordingly.

2. An image processing system according to claim 1 further including an object classifier, said system being responsive to a change in state of said one or more objects indicating a new object within the field of view of the image acquisition device, to provide a portion of said subsequent image frame bounding said object to said object classifier to attempt to label said object as one of a limited number of object types.

3. An image processing system according to claim 2 in which said types include one or more of: boxes or parcels.

4. An image processing system according to claim 1 further including an object tracker (50) configured to keep track of a location of one or more identified objects across a plurality of subsequently acquired image frames in which no activity is occurring in said environment.

5. An image processing system according to claim 1 wherein said system is configured to analyze a set of frames (n...n+3) including said currently acquired image frame (n+3) and a plurality of previously acquired image frames (n...n+2) to determine if activity is occurring in said environment.

6. An image processing system according to claim 5 wherein a time interval (I₀₁, I₁₂, I₂₃) between successive pairs of image frames within said set of frames is variable to identify faster moving and slower moving activity within the field of view of the image acquisition device.

7. An image processing system according to claim 1 wherein the system is configured to ignore activity occurring within designated regions of said currently acquired image frame.

8. An image processing system according to claim 1 wherein said system is responsive to a previously identified object leaving the field of view of the image acquisition device to issue an alarm notification.

9. An image processing system according to claim 1 wherein said system is configured to analyze said at least a currently acquired image frame to determine a type of activity occurring in said environment.

10. An image processing system according to claim 1 wherein said image processing system is integrally formed with said image acquisition device.

11. An image processing system according to claim 1 wherein said image processing system is remotely connected to said image acquisition device.

12. An image processing system according to claim 1 wherein said image frames comprise either color or monochrome image frames.

13. An image processing system according to claim 1 wherein said system is configured to notify a user of a remotely connected device.

## Patentansprüche

1. Ein Bildverarbeitungssystem, das einen Prozessor beinhaltet, der konfiguriert ist, um von einer Bilderfassungsvorrichtung (100) eine Sequenz von Vollbildern (12) zu empfangen, wobei das System für Folgendes konfiguriert ist:
Analysieren eines aktuell erfassten Vollbilds (n+3) und mindestens eines zuvor erfassten Vollbilds (n...n+2), um zu bestimmen, ob in einer Umgebung innerhalb eines Sichtfelds der Bilderfassungsvorrichtung Aktivität stattfindet, wobei Aktivität jegliche in einem Bereich von Interesse innerhalb des Sichtfelds der Bilderfassungsvorrichtung (100) detektierte Bewegung beinhaltet;
reagierend auf das Analysieren eines nachfolgenden Vollbilds (n+y), das nach dem aktuell erfassten Vollbild erfasst wird, und mindestens eines Vollbilds, das vor dem nachfolgenden Vollbild erfasst wird, und auf das Bestimmen, dass in der Umgebung keine Aktivität stattfindet, Abrufen eines vor dem aktuell erfassten Vollbild (n...n+3) erfassten Vollbilds (n-x), das analysiert wurde und für das bestimmt wurde, dass keine Aktivität in der Umgebung stattfindet;
Analysieren (30-12) nur des nachfolgenden Vollbilds und des abgerufenen Vollbilds, um einen Zustand eines oder mehrerer Objekte innerhalb des Sichtfelds der Bilderfassungsvorrichtung zu identifizieren, wobei der Zustand das Vorhandensein eines oder mehrerer zuvor detektierter Objekte oder das Erscheinen eines oder mehrerer neu detektierter Objekte angibt; und
reagierend auf eine Zustandsänderung des einen oder der mehreren Objekte, entsprechendes Benachrichtigen eines Nutzers.

2. Bildverarbeitungssystem gemäß Anspruch 1, das ferner einen Objektklassifikator umfasst, wobei das System auf eine Zustandsänderung des einen oder der mehreren Objekte, die ein neues Objekt innerhalb des Sichtfelds der Bilderfassungsvorrichtung angibt, reaktionsfähig ist, um dem Objektklassifikator einen Abschnitt des nachfolgenden Vollbilds, der das Objekt umgrenzt, für den Versuch einer Benennung des Objekts als einen von einer begrenzten Anzahl von Objekttypen bereitzustellen.

3. Bildverarbeitungssystem gemäß Anspruch 2, wobei die Typen eines oder mehrere von Folgendem umfassen: Pakete oder Päckchen.

4. Bildverarbeitungssystem gemäß Anspruch 1, das ferner einen Objekttracker (50) umfasst, der konfiguriert ist, um einen Standort eines oder mehrerer identifizierter Objekte über eine Vielzahl von nachfolgend erfassten Vollbildern, in denen keine Aktivität in der Umgebung stattfindet, zu verfolgen.

5. Bildverarbeitungssystem gemäß Anspruch 1, wobei das System konfiguriert ist, um einen Satz Einzelbilder (n...n+3) zu analysieren, der das aktuell erfasste Vollbild (n+3) und eine Vielzahl von zuvor erfassten Vollbildern (n...n+2) umfasst, um zu bestimmen, ob in der Umgebung Aktivität stattfindet.

6. Bildverarbeitungssystem gemäß Anspruch 5, wobei ein Zeitintervall (I₀₁, I₁₂, I₂₃) zwischen aufeinanderfolgenden Paaren von Vollbildern innerhalb des Satzes Einzelbilder variabel ist, um eine sich schneller bewegende und eine sich langsamer bewegende Aktivität innerhalb des Sichtfelds der Bilderfassungsvorrichtung zu identifizieren.

7. Bildverarbeitungssystem gemäß Anspruch 1, wobei das System konfiguriert ist, um Aktivität, die innerhalb designierter Regionen des aktuell erfassten Vollbilds stattfindet, zu ignorieren.

8. Bildverarbeitungssystem gemäß Anspruch 1, wobei das System darauf reaktionsfähig ist, dass ein zuvor identifiziertes Objekt das Sichtfeld der Bilderfassungsvorrichtung verlässt, um eine Warnnachricht auszugeben.

9. Bildverarbeitungssystem gemäß Anspruch 1, wobei das System konfiguriert ist, um das mindestens eine aktuell erfasste Vollbild zu analysieren, um einen Typ von in der Umgebung stattfindender Aktivität zu bestimmen.

10. Bildverarbeitungssystem gemäß Anspruch 1, wobei das Bildverarbeitungssystem integral mit der Bilderfassungsvorrichtung gebildet ist.

11. Bildverarbeitungssystem gemäß Anspruch 1, wobei das Bildverarbeitungssystem mit der Bilderfassungsvorrichtung fernverbunden ist.

12. Bildverarbeitungssystem gemäß Anspruch 1, wobei die Vollbilder entweder Farb- oder Monochromvollbilder beinhalten.

13. Bildverarbeitungssystem gemäß Anspruch 1, wobei das System konfiguriert ist, um einen Benutzer einer fernverbundenen Vorrichtung zu benachrichtigen.

## Revendications

1. Un système de traitement d'images comprenant un processeur configuré pour recevoir une séquence de photogrammes (12) d'images en provenance d'un dispositif d'acquisition d'images (100), le système étant configuré pour :
analyser un photogramme d'image actuellement acquis (n+3) et au moins un photogramme d'image précédemment acquis (n... n+2) afin de déterminer si une activité est en train de se produire dans un environnement dans les limites d'un champ de vision du dispositif d'acquisition d'images, l'activité comprenant tout mouvement détecté dans une zone d'intérêt dans les limites du champ de vision du dispositif d'acquisition d'images (100) ;
en réponse à l'analyse d'un photogramme d'image suivant (n+y) acquis après ledit photogramme d'image actuellement acquis et d'au moins un photogramme d'image acquis avant ledit photogramme d'image suivant et à la détermination qu'aucune activité n'est en train de se produire dans ledit environnement, récupérer un photogramme d'image (n-x) acquis avant ledit photogramme d'image actuellement acquis (n... n+3) qui a été analysé et où il a été déterminé qu'aucune activité n'est en train de se produire dans ledit environnement ;
analyser (30-12) seulement ledit photogramme d'image suivant et ledit photogramme d'image récupéré afin d'identifier un état d'un ou de plusieurs objets dans les limites du champ de vision du dispositif d'acquisition d'images, grâce à quoi l'état indique la présence d'un ou de plusieurs objets précédemment détectés ou l'apparition d'un ou de plusieurs objets nouvellement détectés ; et
en réponse à un changement dans l'état desdits un ou plusieurs objets, notifier un utilisateur en conséquence.

2. Un système de traitement d'images selon la revendication 1 incluant en outre un classificateur d'objets, ledit système étant en réponse à un changement dans l'état desdits un ou plusieurs objets indiquant un nouvel objet dans les limites du champ de vision du dispositif d'acquisition d'images, pour fournir une portion dudit photogramme d'image suivant délimitant ledit objet audit classificateur d'objets afin de tenter de cataloguer ledit objet comme étant un objet d'un nombre limité de types d'objet.

3. Un système de traitement d'images selon la revendication 2 dans lequel lesdits types incluent un ou plusieurs types parmi : des boîtes ou des colis.

4. Un système de traitement d'images selon la revendication 1 incluant en outre une unité de suivi d'objet (50) configurée pour suivre un emplacement d'un ou de plusieurs objets identifiés sur l'ensemble d'une pluralité de photogrammes d'image acquis par la suite dans lesquels aucune activité n'est en train de se produire dans ledit environnement.

5. Un système de traitement d'images selon la revendication 1 où ledit système est configuré pour analyser un ensemble de photogrammes (n... n+3) incluant ledit photogramme d'image actuellement acquis (n+3) et une pluralité de photogrammes d'image précédemment acquis (n... n+2) afin de déterminer si une activité est en train de se produire dans ledit environnement.

6. Un système de traitement d'images selon la revendication 5 où un créneau temporel (I₀₁, I₁₂, I₂₃) entre des paires successives de photogrammes d'image dans les limites dudit ensemble de photogrammes est variable afin d'identifier une activité de mouvement plus rapide et de mouvement plus lent dans les limites du champ de vision du dispositif d'acquisition d'images.

7. Un système de traitement d'images selon la revendication 1 où le système est configuré pour ignorer l'activité se produisant dans les limites de régions désignées dudit photogramme d'image actuellement acquis.

8. Un système de traitement d'images selon la revendication 1 où ledit système est en réponse à un objet précédemment identifié quittant le champ de vision du dispositif d'acquisition d'images afin d'émettre une notification d'alarme.

9. Un système de traitement d'images selon la revendication 1 où ledit système est configuré pour analyser ledit au moins un photogramme d'image actuellement acquis afin de déterminer un type d'activité se produisant dans ledit environnement.

10. Un système de traitement d'images selon la revendication 1 où ledit système de traitement d'images est formé de façon solidaire avec ledit dispositif d'acquisition d'images.

11. Un système de traitement d'images selon la revendication 1 où ledit système de traitement d'images est connecté à distance audit dispositif d'acquisition d'images.

12. Un système de traitement d'images selon la revendication 1 où lesdits photogrammes d'image comprennent soit des photogrammes d'image en couleurs, soit des photogrammes d'image monochromes.

13. Un système de traitement d'images selon la revendication 1 où ledit système est configuré pour notifier un utilisateur d'un dispositif connecté à distance.
